# EUROPEAN PATENT APPLICATION

(11) **EP 1 936 210 A1**
(43) Date of publication of application: **25.06.2008**
(21) Application number: 06270105.7
(22) Date of filing: 19.12.2006
(51) Int. Cl.: F16B 3/06, F16B 39/10

(54) **Locking Expanding Diameter Fasteners**

(71) Applicant: BAE Systems PLC, London SW1Y 5AD (GB)
(72) Inventor: White, Andrew Charles, Balderstone, Lancashire, BB2 7LF (GB)
(74) Representative: BAE SYSTEMS plc Group IP Department

(57) **Abstract**

An expanding diameter fastener for aerospace applications where a precise locking torque setting is required comprises an array of bolts (20) disposed around the shank (2) of the fastener, arranged to act on an expandable collet (8) to lock the fastener, where each bolt has a ratchet formation (60) on its head, and a releasable lock member (64) is clipped to the fastener having finger portions (66) for engaging respective ratchet formations to lock the bolts against loosening rotation.

## Description

### Field of the invention

This invention relates the locking of expanding diameter fastener for aerospace applications.

### Background art

It is known to provide Expanding Diameter Fasteners (EDF) for aerospace applications, where very large loads may be exerted on the fastener, e.g. for suspending an aircraft in a hangar. In such cases the diameter of the fastener may be several inches. A known type of EDF comprises a collet, formed as a split ring, located around the shank of a threaded bolt. The collet and shank have cooperating surfaces such that, when the bolt is tightened within a borehole, the collet expands radially outwardly to lock the bolt within the borehole.

Problems with such EDF are that, partly on account of its large size, high installation torques is required to overcome frictional forces arising during tightening, and it becomes very difficult to tighten the fastener to a specific torque value (which specific accuracy may be required in an aerospace application). Further over the course of time, the fastener may loosen from its initial torque setting.

### Summary of the invention

It is an object of the invention to provide an expanding diameter fastener for aerospace applications, where the problems referred to above are largely overcome, or at least reduced.

The invention provides an expanding diameter fastener, comprising a shank member for location within an aperture, a collet means surrounding the shank member, the collet means and the shank member having cooperating surfaces such that relative axial movement causes outward radial expansion of the collet means to lock the fastener within the aperture,
an array, comprising a plurality of bolts, disposed around said shank, a pressure member disposed between said array and said collet means, such that tightening of said bolts creates an axial movement which is transmitted via said pressure member to said collet means, and a means for locking each of said bolts in a tightened condition.

The provision of an array of bolts for tightening the fastener implies that the load on each bolt is correspondingly reduced for a required overall load. Hence frictional forces on each bolt arising during tightening are reduced, and the attainment of a specific torque value setting for the bolt is simplified. In particular, such an arrangement does not affect the fastener loading torque, it does not generate discard materials or parts (which could pose a "Foreign Object Damage" (FOD) risk in an aerospace application), and it is easily achievable to a standard suitable for qualification for use in primary flight control systems.

A locking means may be provided for locking each bolt in a tightened condition, so as to maintain the torque setting over the course of time. In some circumstances, each bolt may comprise a quick-release mechanism which is preset to a specific torque setting when locked. However, since the primary application of the invention is for high value loads on the fastener, it is preferred to use threaded bolts. A separate mechanism is then required to lock each bolt in its initial torque setting.

Since each bolt is desirably set to a specific torque value, this implies that the head of the bolt is spaced from its mounting. This therefore precludes the use of known tab locking devices. Such locking means may comprise a cable or wire wound around the shank of each bolt between the bolt head and a mounting plate for the bolt array. Alternatively the locking means may comprise a distorted threaded bone in the bolt mounting plate. Another possibility is that a tab washer device is applied to the bolt mounting plate subsequent to bolt tightening. A respective tab on the washer abuts a facet of each bolt head to prevent the bolt head from rotating. All of the above possibilities for locking suffer from disadvantages which will be explained in detail below.

In a specific and preferred form of the invention, each bolt head of the array is formed to cooperate with a device so as to create a ratchet mechanism. This ensures that each bolt head is held in its desired torque setting by means of the ratchet mechanism. Further the ratchet mechanism permits a precise torque setting. In a preferred form, each bolt head of the array is formed with a ratchet wheel formation, in addition to facets for receiving a tightening mechanism such as a spanner or hex hey. A pawl mechanism is provided on the bolt mounting plate for cooperating with each bolt head. Whilst such pawl mechanism may take a variety of forms, for example a separate sprung pawl element mounted adjacent each bolt head, a preferred mechanism is a single lock member which is releasably fixed to the mounting plate, and which includes a plurality of spring fingers, each of which is arranged for engaging the respective ratchet formation of a bolt head. The lock member includes a band portion which may be clipped onto the periphery of the mounting plate. The band portion is integral with the spring fingers. Additionally locating and stabilising fingers may be provided engaging with the surface of the mounting plate.

Thus, in a second specific aspect, the invention provides an expanding diameter fastener, comprising a shank member for location with an aperture, a collet means surrounding the shank member, the collet means and the shank member having cooperating surfaces such that relative axial movement causes outward radial expansion of the collet means to lock the fastener within the aperture,
an array, comprising a plurality of bolts, disposed around said shank member, a pressure member disposed between said array and said collet means, such that tightening of said bolts creates an axial movement which is transmitted via said pressure member to said collet means, and a locking means for locking each of said bolts in a tightened condition, said locking means comprising a ratchet mechanism, for restraining each bolt from loosening rotation.

### Brief description of the drawings

Preferred embodiments of the invention will now be described with reference to the accompanying drawings wherein:-
Figure 1 is a top plan view of an expanding diameter fastener according to the invention, but excluding a bolt locking mechanism;
Figure 2 is a side view of the fastener of Figure 1;
Figure 3 is a is a perspective view of a first embodiment of the invention, incorporating the fastener of Figure 1 and a locking cable;
Figure 4 is a perspective view of a second embodiment of the invention, incorporating the fastener of Figure 1 and locking threads;
Figure 5 is a perspective view of a second embodiment of the invention, incorporating the fastener of Figure 1 and a locking tab washer;
Figure 6a is a perspective view of a fourth and preferred embodiment of the invention, incorporating the fastener of Figure 1, and a ratchet locking mechanism;
Figure 6b is a view of the embodiment of Figure 6a from a different perspective;
Figure 6c is an exploded view of the embodiment of Figures 6a and 6b.
Figure 7 is a rear perspective and exploded view of the preferred embodiment of the invention; and
Figure 8 is a detail perspective view of a single bolt of the preferred embodiment, showing a ratchet formation on the bolt head.

### Description of the preferred embodiments

In development of Expanding Diameter Fasteners for aerospace applications, e.g. for a Horizontal Tail hinge, high installation loads have been experienced, which means compromise the intended application. The present invention proposes a revised method of expanding tapered collets, utilising a circular array of smaller threaded bolts. Once the Fastener is correctly located, each bolt is torque to the correct value. Since the shoulders of these bolts do not seat on the threaded plate, as a gap must always be present for a correct torque setting, this precludes the use of conventional tab locking devices.

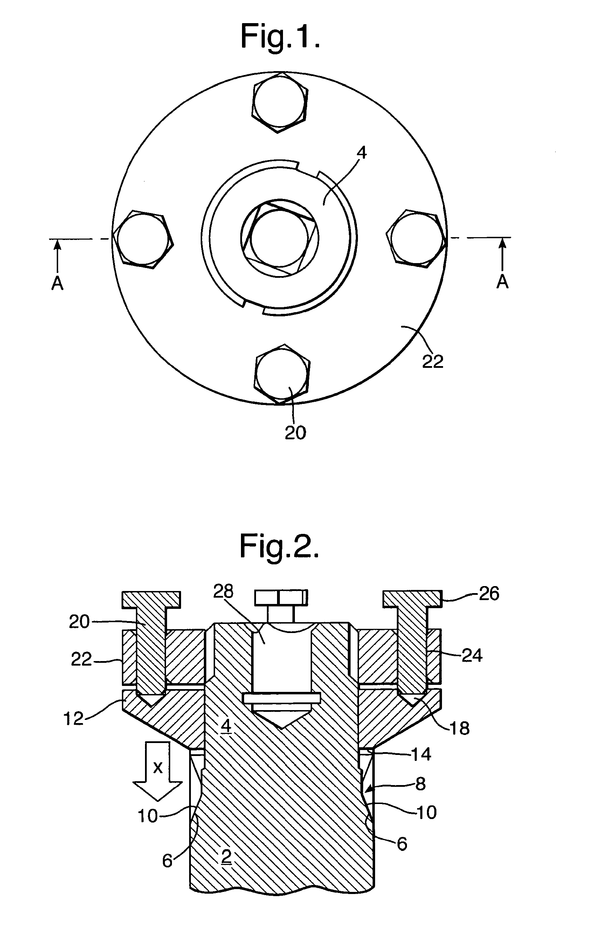

Referring to Figures 1 and 2, there is shown an Expanding Diameter Fastener (EDF) which is incorporated in the embodiments of the invention described below. The EDF comprises a cylindrical shank member 2 having a reduced diameter upper section 4, which tapers from the main part of member 2 in a tapering wall surface 6. A collet 8, formed as a split ring, disposed around upper section 4 in the region of surface 6, is formed with a tapering inner surface 10 which engages surface 6 to permit relative sliding movement. A disc shaped pressure plate 12 is slidably located on section 4 above collet 8 and has a lower edge surface 14 for engaging collet 8. The upper surface 16 of the pressure plate has recesses 18 for receiving the free ends of bolts 20.

The top of the fastener has a disc-shaped mounting plate 22 secured around section 4. Plate 22 has four threaded bores 24 for receiving four threaded bolts 20 arranged in a regular array. Bolts 24 have hexagonal shaped heads 26. In addition the top of section 4 has a hexagonal recess 28 for receiving a hex key.

In use, shank 2 is inserted into a bore or other locating aperture or recess (not shown). Bolts 20 are tightened, according to a predetermined sequence and until desired torques are reached, so that their free ends engage in recesses 18, to push pressure plate 12 downward by into abutment with the top edge of collet 8. This causes collet 8 to move downwardly, and relative movement between tapered surfaces 6, 10 causes the collet to expand radially outwardly to engage the inner wall of the locating recess, to fix the EDF in position.

In the secured position, the heads 26 of bolts 20 are spaced from the upper surface of plate 22. In order to fix the bolts 20 in position, and to maintain the torque setting, the following measures may be undertaken.

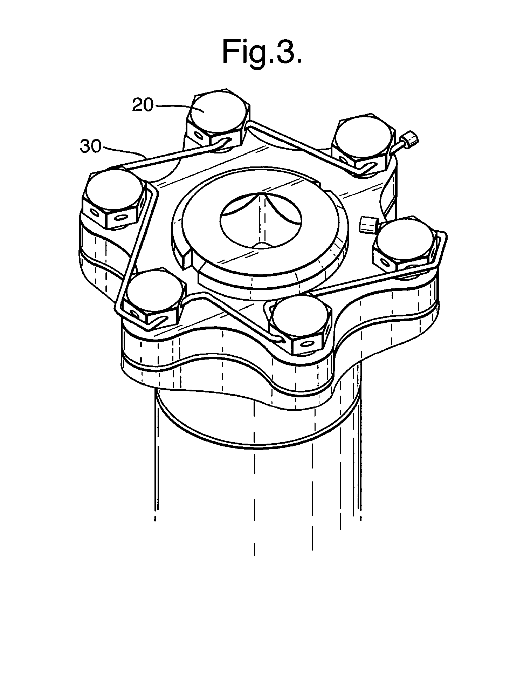

In the first embodiment shown in Figure 3, a wire 30, known by the trade mark Safe-T-Cable, is wound around the shanks of bolts 20 beneath the heads in order to jam the bolts in position. However this embodiment may be difficult for an operator to operate where the fastener is located in an inaccessible position, and gives rise to an unacceptable FOD hazard.

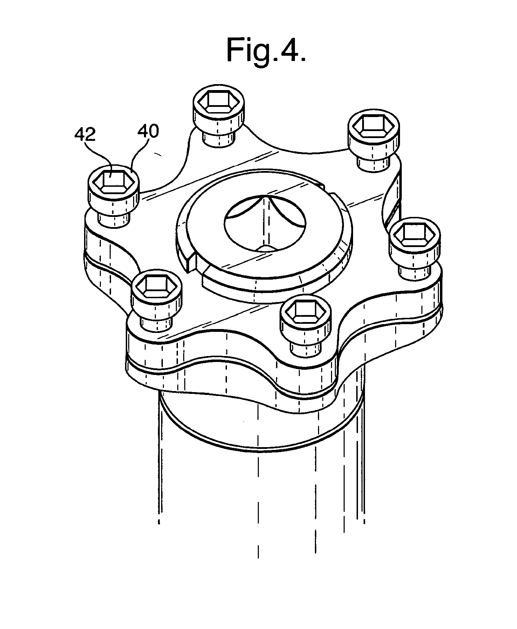

In a second embodiment shown in Figure 4 the heads 40 of bolts 20 are formed with recesses 42 to receive a hex key. The threaded bores 24 of plate 22 have distorted threaded holes in order to provide a locking effect. However additional torque may be required to overcome the resistance of the distorted thread, and this is not constant or repeatable. The resistance of the distorted thread may diminish with wear and number of repeat operations. This may make this embodiment unsuitable for certain applications.

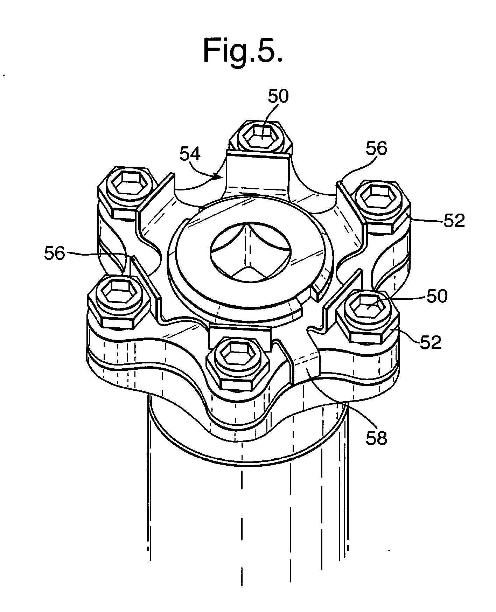

In a third embodiment shown in Figure 5, the heads of bolts 20 are formed with hex key recesses 50, and hexagonal facets 52. A tab washer 54 is provided, having a series of tabs 56 which are arranged to engage hexagonal facets 52 for locking of the bolts. In addition a locating tab 58 is provided engaging the edge of maintaining plate 22. This embodiment requires that each bolt 20 is oriented to align a hex face 52 normal to the pin axis before the washer 54 can be introduced. The retention of tab washer 54 by means of tab 58 requires additional part or process. Permanent deformation of the washer requires discarding and replacement of tab washer for each disassembly/assembly operation.

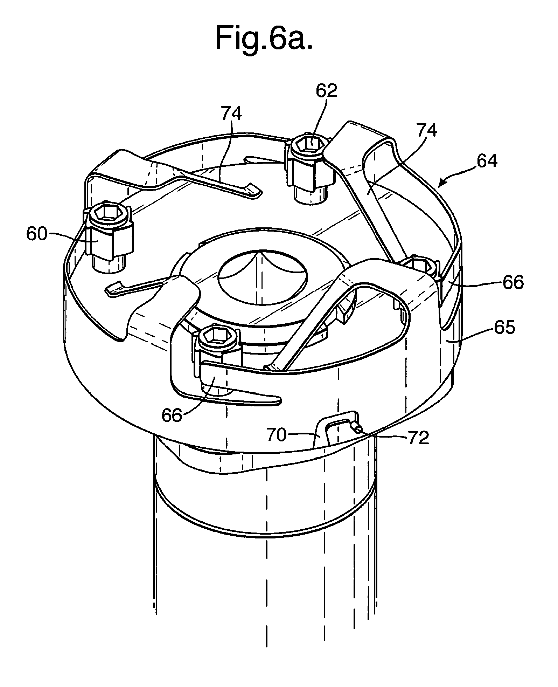

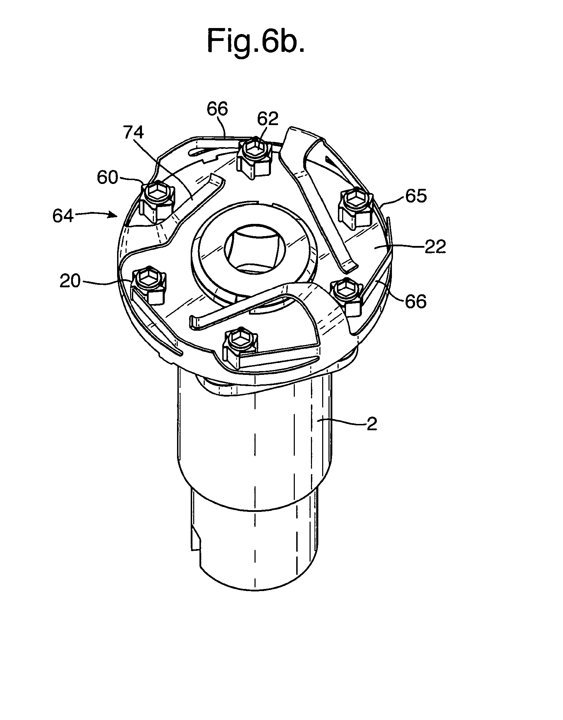

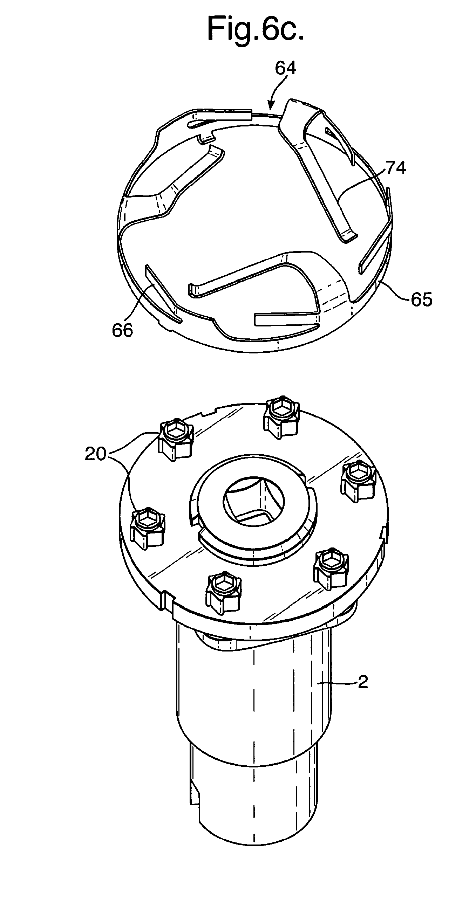

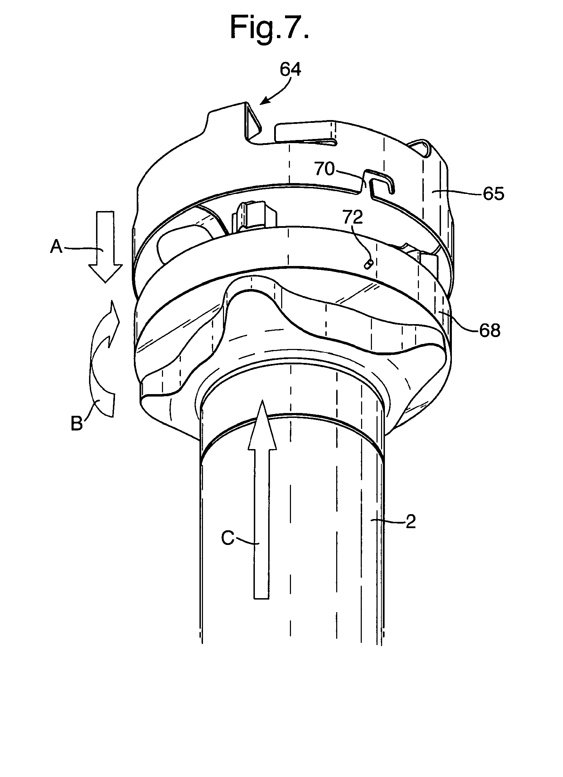

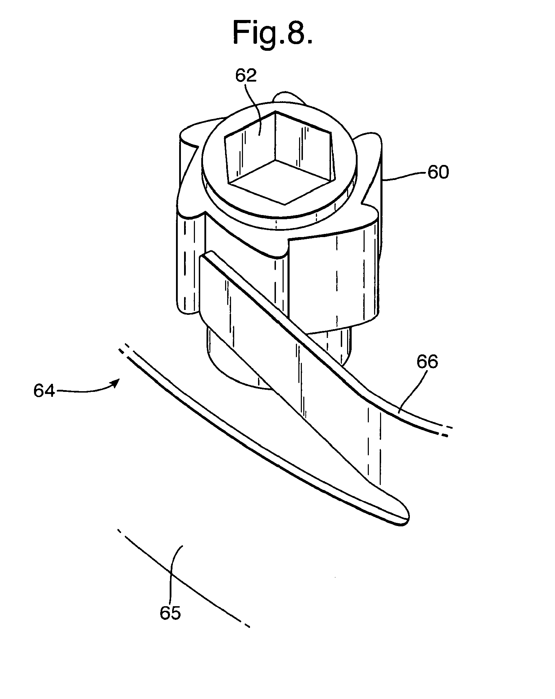

Referring now to the fourth and preferred embodiment shown in Figures 6 to 8, each bolt 20 has a head formed with a six part ratchet cam formation 60 around its periphery. In addition each bolt has a recess 62 for receiving a hex key. A pawl mechanism is provided comprising a lock member 64 having an annular band 65 for clipping onto the circular edge 68 of the mounting plate (see Figure 7). In addition a bayonet recess 70 in band 65 engages a pin 72 located on edge 68. Clip member 64 is formed of spring steel, and includes a series of four inwardly directed fingers 66, each of which is arranged to engage a respective ratchet formation 60 of a bolt 20, and to act as a spring pawl element. In addition four locating fingers 74 are provided engaging the upper surface of plate 22, for providing stability and rigidity. As can be seen from Figure 8, finger 74 is closely adjacent ratchet formation 60, allowing each bolt to be torqued to a precise required value without significant additional resistance. Rotation of the bolt in a loosening direction is prevented by finger 74 engaging the ratchet cams. There is an additional benefit of an audible indication of incremental tightening during sequential tightening of the bolts, allowing precise tightening steps.

In order to loosen the Fastener, the lock member or clip 64 must first be removed. This is achieved as shown in Figure 7, by (1) pushing the clip downwardly in the direction of arrow A, (2) rotating the clip in the direction of arrow B, and (3) lifting the clip in the direction of arrow C, in order to release the bayonet coupling 70, 72.

In a modification, a six bolt array, instead of the four shown, may allow smaller sized components, offering weight saving and/or better space constraint, but at the cost of additional installation time.

In some situations, the collet means may be combined with the pressure member on which the bolt pressed has a simplification in construction.

## Claims

1. An expanding diameter fastener, comprising a shank member for location within a locating recess, a collet means surrounding the shank member, the collet means and the shank member having cooperating surfaces such that relative axial movement causes outward radial expansion of the collet means to lock the fastener within the recess, an array comprising a plurality of bolts, disposed around said shank member, a pressure member disposed between said array and said collet means, such that tightening of said bolts creates an axial movement which is transmitted via said pressure member to said collet means, and a locking means for locking each of said bolts in a tightened condition.

2. A fastener as claimed in claim 1, wherein said bolts are located in threaded apertures in a mounting plate secured to said shank member.

3. A fastener as claimed in claim 2 wherein said locking means comprises one of : a wire wound around the shanks of the bolts between their heads and the mounting plate, distorted threads in said threaded apertures; and a tab washer located on said mounting plate and having a respective upstanding tab for abutting against a facet of each bolt head.

4. An expanding diameter fastener, comprising a shank member for location within a locating recess, a collet means surrounding the shank member, the collet means and the shank member having cooperating surfaces such that relative axial movement causes outward radial expansion of the collet means to lock the fastener within the recess, an array comprising a plurality of bolts, disposed around said shank, a pressure member disposed between said array and said collet means, such that tightening of said bolts creates an axial movement which is transmitted via said pressure member to said collet means, and a locking means for locking each of said bolts in a tightened condition, said locking means comprising a ratchet mechanism for restraining each bolt from loosening rotation.

5. A fastener according to claim 4, wherein each of said bolts includes a ratchet wheel formation and including a pawl means for engaging with each ratchet wheel formation.

6. A fastener according to claim 5, wherein said bolts are located in a mounting plate secured to said shank member, and including a lock member located on said mounting plate, said lock member including finger portions comprising said pawl means.

7. A fastener according to claim 6, wherein said lock member includes a band portion for releasably clipping around the periphery of the mounting plate.

8. A fastener according to claim 7, including a bayonet mechanism for securing said band portion to said mounting plate.

9. A fastener according to claim 6 or 7, wherein said lock member includes stabilising finger portions for engaging the upper surface of said mounting plate.

10. A fastener according to any of claims 6 to 9, wherein said lock member is formed of spring metal strip.
